(19) Europäisches Patentamt
European Patent Office
Office européen des brevets

(11) **EP 3 006 733 B1**

(12) **EUROPEAN PATENT SPECIFICATION**

(45) Date of publication and mention
of the grant of the patent:
**22.05.2019 Bulletin 2019/21**

(51) Int Cl.:
*F04B 1/04* (2006.01)   *F04B 53/18* (2006.01)
*F01B 1/06* (2006.01)   *F03C 1/04* (2006.01)
*F03D 15/20* (2016.01)   *F03D 9/25* (2016.01)
*F03D 9/28* (2016.01)

(21) Application number: **15169860.2**

(22) Date of filing: **29.05.2015**

(54) **RADIAL-PISTON TYPE HYDRAULIC MACHINE, HYDRAULIC TRANSMISSION AND WIND TURBINE GENERATOR**

RADIALKOLBEN-HYDRAULIKMASCHINE, HYDRAULIKGETRIEBE UND WINDTURBINENGENERATOR

MACHINE HYDRAULIQUE DE TYPE À PISTONS RADIAUX, TRANSMISSION HYDRAULIQUE ET GÉNÉRATEUR DE TURBINE ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2014 JP 2014178135**

(43) Date of publication of application:
**13.04.2016 Bulletin 2016/15**

(73) Proprietor: **MITSUBISHI HEAVY INDUSTRIES, LTD.**
**Tokyo 108-8215 (JP)**

(72) Inventors:
• **Takeuchi, Hiroaki**
**Tokyo, 108-8215 (JP)**
• **Yoshida, Takafumi**
**Tokyo, 108-8215 (JP)**
• **Ochiai, Hiroyasu**
**Tokyo, 108-8215 (JP)**

(74) Representative: **Intès, Didier Gérard André et al**
**Cabinet Beau de Loménie**
**158 rue de l'Université**
**75340 Paris Cedex 07 (FR)**

(56) References cited:
**GB-A- 2 482 879    GB-A- 2 484 890**
**JP-A- H0 798 052    US-B1- 6 237 441**

**Description**

TECHNICAL FIELD

The present disclosure relates to a radial-piston type hydraulic machine, a hydraulic transmission and a wind turbine generator.

BACKGROUND

Conventionally known is a radial-piston type hydraulic machine including a plurality of pistons arranged in a radial fashion. For instance, GB-2 4 84 8 90-A discloses a radial-piston type hydraulic machine including pistons which reciprocate inside cylinders, rollers rotatably attached to the pistons, and a ring cam having a cam surface on which the rollers roll. Further, GB-2482879-A discloses a radial-piston type hydraulic machine that functions as a drivetrain for a wind turbine generator. US 6,237,441 B1 discloses a radial-piston type hydraulic machine according to the preamble of appended claim 1. JP H07-98052 A discloses a ceramic slide member.

SUMMARY

Meanwhile, in a radial-piston type hydraulic machine, lubricant oil is occasionally supplied between roller surfaces and a cam surface so that friction between the rollers and the cam is reduced, and so that energy loss and wear of the rollers and the cam are reduced. The roller surfaces and the cam surface are normally formed to be smooth by surface processing such as polishing so that friction between the rollers and the cam can be reduced. However, lubricant oil, which should be retained between the roller surfaces and the cam surface, may flow out due to small grooves produced by the surface processing, which makes it difficult to maintain an adequate thickness for an oil film of lubricant oil formed between the roller surfaces and the cam surface. If this oil film becomes thin the surface is more easily damaged by contact between the rollers and the cam, which may shorten the lifetime of the rollers or the cam.

In this regard, while GB-2484890-A, GB-2482879-A and US-6,237,441-B1 disclose configurations of a radial-piston type hydraulic machine in which rollers roll on a cam surface, there is no disclosure of maintaining an oil film between roller surfaces and a cam surface.

In view of the above issues, an object of at least one embodiment of the present invention is to provide a radial-piston type hydraulic machine whereby an oil film between roller surfaces and a cam surface is maintained and a lifetime of rollers or a cam is improved.

    (1) A radial-piston type hydraulic machine according to at least one embodiment of the present invention includes: at least one piston arranged along a radial direction of the hydraulic machine; a roller disposed rotatably on the piston, the roller having a roller surface; and a cam having a cam surface which is disposed so as to face the roller surface across an oil film of a lubricant oil, the cam being configured to be rotatable.

At least one of the roller surface or the cam surface has an isotropic surface roughness or a surface roughness having an anisotropy along a direction of a rotational axis of the cam.

During operation of the radial-piston type hydraulic machine, velocities of the roller surface and the cam surface accompanying rotation of the roller and the cam are set so that a value $\Lambda$ is not less than zero and not more than 1.0. The value $\Lambda$ is defined by a following equation:

$$\Lambda = t / (Ra1^2 + Ra2^2)^{0.5}$$

In the equation, "t" is a thickness of the oil film, Ra1 is a surface roughness of the roller surface, and Ra2 is a surface roughness of the cam surface.

For calculating the value $\Lambda$ defined in the above equation, the arithmetical average roughness Ra specified in the Japanese Industrial Standards (JIS) B 0031 (1994) is used as the surface roughness Ra1, Ra2 of the roller surface and the cam surface. The arithmetical average roughness Ra is a portion stretching over a reference length 1 in the direction in which an average line extends is cut out from a roughness curve. This portion is presented in a graph with an X axis extending in the direction of the average line of the cut-out portion and a Y axis extending in the direction of magnitude. When the roughness curve is represented by $y = (f\chi)$, Ra is the value in microns ($\mu$m) obtained by dividing an integral value of $|f(x)|$ in a range where x is from 0 (reference point) to 1 (reference length) by 1.

The value $\Lambda$ is an index indicating difficulty of contact between the roller surfaces and the cam surface. The larger the value $\Lambda$ is, the larger the thickness of the oil film is as compared to the surface roughness between the roller surfaces and the cam surface, which indicates that the roller surfaces and the cam surface are unlikely to contact each other. Further, the smaller the value $\Lambda$ is, the smaller the thickness of the oil film is, which indicates that the roller surfaces and the cam surface are likely to contact each other.

The above "an isotropic surface roughness" refers to a surface roughness which does not have anisotropy in a particular direction.

As a result of intensive researches of the present inventors, it was found that it is easy to maintain the thickness of the oil film between the roller surfaces and the cam if the surface roughness of the roller surfaces or the cam surface is isotropic or has an anisotropy along a direction of the rotational axis of the cam (direction orthogonal to the rotational direction of the cam), as compared to a case in which the surface roughness is along the rotational direction of the cam. Further, the present inventors found that the improvement effect on the thickness of the oil film achieved by such directionality (anisotropy or isotropy) of the surface roughness of the roller surfaces or the cam surface is remarkably enhanced in a range where the value Λ is not less than zero and not more than 1.0.

According to the hydraulic machine described in the above (1), at least one of the roller surface or the cam surface arranged so as to face each other across the oil film of the lubricant oil has an isotropic surface roughness or a surface roughness having an anisotropy along a direction of the rotational axis of the cam, and velocities of the roller surface and the cam surface accompanying rotation of the roller and the cam are set so that the value Λ is not less than zero and not more than 1.0. Thus, it is possible to improve the thickness of the oil film between the roller surface and the cam surface as compared to a case in which the at least one of the roller surface or the cam surface has a surface roughness along the rotational direction of the cam (direction orthogonal to the rotational axis of the cam). As described above, improving the thickness of the oil film between the roller surface and the cam surface makes it possible to restrict degradation of the roller surface or the cam surface, which makes it possible to improve the lifetime of the roller or the cam.

(2) In some embodiments, for instance, the hydraulic machine described in the above (1) is configured so that, when the lubricant oil has a kinetic viscosity of 35.0 to 55.0mm$^2$/s at a temperature of 40°C, the oil film has a thickness larger than that in a case where the one of the roller surface or the cam surface is a mirrored surface.

With the above configuration (2), it is also possible to improve the thickness of the oil film between the roller surface and the cam surface in a case where an oil that has a relatively low viscosity for a lubricant oil is used as the lubricant oil.

(3) In some embodiments, for instance in the configuration described in the above (1) or (2), the one of the roller surface or the cam surface has a polishing direction along the rotational axis, and the surface roughness has an anisotropy along the same direction as the polishing direction.

According to the above configuration (3), one of the roller surface or the cam surface has a surface roughness formed by polishing, and the polishing direction is a direction along the rotational axis of the cam. Thus, the surface roughness of the roller surface or the cam surface has an anisotropy along a direction of the rotational axis of the cam, which makes it possible to improve the thickness of the oil film between the roller surface and the cam surface.

(4) In some embodiments, for instance in the configuration described in the above (1) or (2), the one of the roller surface or the cam surface has the isotropic surface roughness, and the surface roughness is formed by performing a blast processing at least on the one of the roller surface or the cam surface.

With the above configuration (4), one of the roller surface or the cam surface has a surface roughness formed by the blast processing, and the surface roughness is isotropic. Thus, since the surface roughness of the roller surface or the cam surface is isotropic, it is possible to improve the thickness of the oil film between the roller and the cam.

(5) In some embodiments, for instance in the configuration described in the above (1) to (4), the surface roughness Ra of the one of the roller surface or the cam surface is not less than 0.1 and not more than 0.3.

It is generally believed to be desirable to make a surface smooth to improve lubricity in order to restrict abrasion at a contact part between two objects. Thus, it may be considered that the smaller the surface roughness Ra of the roller surface and the cam surface is, the longer the lifetime of the roller and the cam would be. However, according to the findings of the present inventors, it is possible to improve the thickness of the oil film between the roller and the cam by forming a suitable surface roughness such that Ra is approximately 0.1 to 0.3 on the roller surface or the cam surface and controlling the directionality of the surface roughness as described above, rather than by finishing the surface of the roller surface or the cam surface with mirroring to make Ra less than 0.1.

With the above configuration (5), it is possible to maintain good lubricity between the roller and the cam while retaining an adequate thickness for the oil film of the lubricant oil between the roller and the cam, by making the surface roughness Ra of the roller surface or the cam surface not less than 0.1 and not more than 0.3.

(6) In some embodiments, for instance in the configuration described in the above (1) to (5), at least one of the roller surface or the cam surface is constituted by a coating which contains a coating material having a hardness higher than a material included in other one of the roller surface or the cam surface.

With the above configuration (6), one of the roller surface or the cam surface that is constituted by a coating containing a hard coating material polishes the other one, so that the surface roughness of the other one improves (in other words, the surface roughness Ra decreases), which results in an increase in the value A defined by the above expression. Thus, it is possible to improve the thickness of the oil film between the roller surface and the cam surface and to restrict degradation of the roller surface or the cam surface, which makes it possible to improve the lifetime of the roller or the cam.

(7) In some embodiments, for instance in the configuration described in the above (6), the roller surface is constituted by the coating containing the coating material.

In a radial-piston type hydraulic machine, a plurality of rollers is dispersedly arranged around a cam, and each roller is configured to roll on the cam surface of the cam.

According to the above configuration (7), if damage such as detachment of the coating has occurred to a coated portion, only the roller with the damage needs to be replaced. Each roller is relatively small with respect to the cam, and replacement of a roller is easier than that of the cam. Thus, maintainability of the hydraulic machine is improved. Further, since the rollers which are normally smaller in size than the cam are coated, the coating process is easier than in a case where the cam is coated.

(8) In some embodiments, for instance in the configuration described in the above (6) or (7), the coating material is diamond-like carbon (DLC).

According to the above configuration (8), DLC being a material with high hardness is used as a coating material, which makes it possible to obtain a structure in which the coated one of the roller surface or the cam surface is unlikely to be damaged, and to easily improve the surface roughness of the other one of the roller surface or the cam surface.

(9) In some embodiments, for instance in the configuration described in the above (6) to (8), the roller surface is constituted by the coating containing the DLC, and the cam surface is constituted by a bearing steel.

(10) In some embodiments, for instance in the configuration described in the above (6) to (9), the hydraulic machine is configured so that it is possible to reduce the surface roughness of the other one of the roller surface or the cam surface by operating the hydraulic machine.

According to the above configuration (10), it is possible to reduce the surface roughness of one of the roller surface or the cam surface with the other one of the roller surface or the cam surface that is constituted by a coating containing a coating material with high hardness by operating the hydraulic machine. As a result, the value Λ defined by the above expression increases. Thus, it is possible to improve the thickness of the oil film between the roller surface and the cam surface and to restrict degradation of the roller surface or the cam surface, which makes it possible to improve the lifetime of the roller or the cam.

(11) In some embodiments, for instance in the configuration described in the above (1) to (10), the hydraulic machine further includes a cylinder for reciprocably guiding the at least one piston along the radial direction. The piston includes a piston receiving surface which receives the roller, and a lubricant-oil supply channel for supplying working oil in a working chamber surrounded by the piston and the cylinder as the lubricant oil to the piston receiving surface.

With the above configuration (11), the hydraulic working oil in the working chamber is supplied as lubricant oil to the piston-receiving surface via the lubricant-oil supply channel. Thus, it is unnecessary to provide a special lubricant oil separately from the working oil, and a structure for supplying the special lubricant oil is also unnecessary, which makes it possible to efficiently lubricate the roller with respect to the piston and to the cam.

(12) In some embodiments, for instance in the configuration described in the above (11), the cam surface includes a high-pressure region including a section of the cam surface which faces the roller surface in a period when a pressure in the working chamber is relatively high, and a low-pressure region including a section of the cam surface which faces the roller surface in a period when the pressure in the working chamber is relatively low. Each of the periods is a part of a cycle in which the piston reciprocates in the cylinder. The surface roughness of the low-pressure region is larger than the surface roughness of the high-pressure region.

In a case where the working oil from the working chamber is used to lubricate the sliding part between the piston and the roller, the working oil is securely supplied to the slide part between the piston and the roller while the roller is in the high-pressure region of the cam surface so that the friction coefficient between the piston and the roller remarkably decreases. On the other hand, while the roller is in the low-pressure region of the cam surface, the pressure of the working oil in the working chamber is small and thus the working oil supplied to the slide part between the piston and the roller is not adequate, which leaves the friction coefficient between the piston and the roller large. Thus, slip between the roller and the cam surface is more likely to occur when the roller is in the low-pressure region of the cam surface than when the roller is in the high-pressure region of the cam surface.

With the above configuration (12), it is possible to secure an adequate friction coefficient between the roller and the cam surface (low pressure region), and to prevent slip between the roller surface and the cam surface which is likely to occur when the roller is in the low-pressure region of the cam surface. As a result, it is possible to improve durability against smearing, galling or the like due to slip. Further, since the surface roughness has a distribution on the cam surface so that the surface roughness of the high-pressure region is selectively reduced, it is possible to avoid excessive design compared to a case where the surface roughness of the entire cam surface is evenly reduced, which makes it possible to prevent a size increase of the hydraulic machine and to improve reliability of the hydraulic machine.

(13) A hydraulic transmission according to at least one embodiment of the present invention includes: a rotation shaft; a hydraulic pump configured to be driven by rotation of the rotation shaft; and a hydraulic motor configured to be driven by pressurized oil produced by the hydraulic pump. At least one of the hydraulic pump or the hydraulic motor is, for instance, the radial-piston type hydraulic machine according to the above (1) to (12).

According to the hydraulic transmission described in the above (13), at least one of the roller surface or the cam surface arranged so as to face each other across the oil film of the lubricant oil has an isotropic surface roughness or a surface roughness having an anisotropy along a direction of the rotational axis of the cam, and velocities of the roller surface and the cam surface accompanying rotation of the roller and the cam are set so that a value $\Lambda$ is not less than zero and not more than 1.0. Thus, it is possible to improve the thickness of the oil film between the roller surface and the cam surface as compared to a case in which the at least one of the roller surface or the cam surface has a surface roughness along the rotational direction of the cam (direction orthogonal to the rotational axis of the cam). As described above, improving the thickness of the oil film between the roller surface and the cam surface makes it possible to restrict degradation of the roller surface or the cam surface, which makes it possible to improve the lifetime of the roller or the cam.

(14) A wind turbine power generating apparatus according to at least one embodiment of the present invention includes: at least one blade; a hub to which the at least one blade is attached; a hydraulic pump configured to be driven by rotation of the hub; a hydraulic motor configured to be driven by pressurized oil produced by the hydraulic pump; and a generator configured to be driven by the hydraulic motor. At least one of the hydraulic pump or the hydraulic motor is the radial-piston type hydraulic machine according to the above (1) to (12).

According to the wind turbine power generating apparatus described in the above (14), at least one of the roller surface or the cam surface arranged so as to face each other across the oil film of the lubricant oil has an isotropic surface roughness or a surface roughness having an anisotropy along a direction of the rotational axis of the cam, and velocities of the roller surface and the cam surface accompanying rotation of the roller and the cam are set so that the value $\Lambda$ is not less than zero and not more than 1.0. Thus, it is possible to improve the thickness of the oil film between the roller surface and the cam surface as compared to a case in which the at least one of the roller surface or the cam surface has a surface roughness along the rotational direction of the cam (direction orthogonal to the rotational axis of the cam). As described above, improving the thickness of the oil film between the roller surface and the cam surface makes it possible to restrict degradation of the roller surface or the cam surface, which makes it possible to improve the lifetime of the roller or the cam.

According to at least one embodiment of the present invention, provided is a radial-piston type hydraulic machine in which the oil film between the roller surface and the cam surface is maintained, and the lifetime of the roller or the cam is improved.

BRIEF DESCRIPTION OF DRAWINGS

FIG. 1 is a configuration diagram of a wind turbine power generating apparatus according to one embodiment.
FIG. 2 is a cross sectional view of a hydraulic machine in the radial direction according to one embodiment.
FIG 3 is a cross sectional view of a configuration of cylinders and their peripheral area of a hydraulic machine according to one embodiment.
FIG. 4 is a perspective view of a cam for describing a direction (anisotropy or isotropy) of surface roughness of a roller surface and a cam surface according to one embodiment.
FIGs. 5A to 5C are each a schematic diagram for describing a direction (anisotropy or isotropy) of surface roughness of roller surfaces and a cam surface.
FIG. 6 is a cross sectional view of a piston according to one embodiment.
FIG. 7 is a view of the piston in FIG. 6 as seen from inside in the radial direction of a cam.
FIG. 8A is a graph showing a cam profile and a contact load according to one embodiment. FIG. 8B is a graph showing a cam profile, a cam/roller friction coefficient and a piston/roller friction coefficient according to one embodiment.
FIG. 9 is a graph showing a relationship between directionality of a surface roughness (anisotropy or isotropy) and an oil-film ratio.

DETAILED DESCRIPTION

Embodiments of the present invention will now be described with reference to the accompanying drawings. It is intended, however, dimensions, materials, shapes, relative positions and the like of components described in the embodiments or the drawings shall be interpreted as illustrative only and not limitative of the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal", "identical" and "uniform" shall not be construed as indicating only the state in which the feature is strictly equal, but also includes a state in which there is a tolerance or a difference that can still achieve the same function.

For instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

In the following embodiments, a wind turbine generator will be described as an example of an apparatus to which a hydraulic machine or a hydraulic transmission is applied. However, the hydraulic machine or the hydraulic transmission of the present invention may be used in other renewable energy power generating apparatuses such as a tidal current power generating apparatus, an ocean current power generating apparatus and a river current power generating apparatus, or other apparatuses such as a construction machine. Accordingly, usage of the above hydraulic machine or the hydraulic transmission is not particularly limited.

Further, while embodiments of a hydraulic machine mainly including an outward cam are described below, the hydraulic machine may include an inward cam, in case of which the embodiments of the present invention also include embodiments in which directions in the following description are read as reversed where appropriate. Further, while a cam mainly rotates in the example described below, the cam may be fixed and the cylinders and pistons may be configured to rotate.

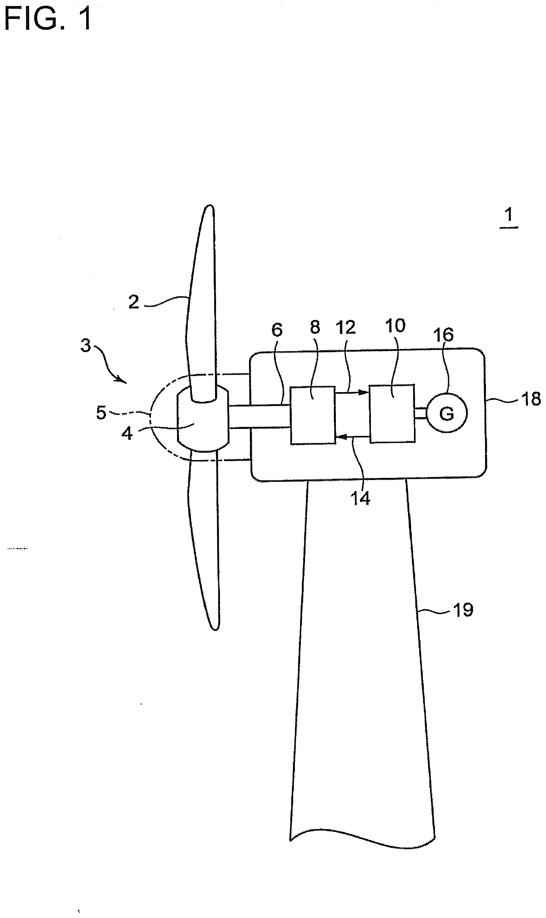

FIG. 1 is a configuration diagram of a wind turbine power generator according to one embodiment. As illustrated in the drawing, a wind turbine generator 1 includes a rotor 3 including at least one blade 2 and a hub 4. Here, the hub 4 may be covered by a hub cover (spinner) 5.

In one embodiment, a hydraulic pump 8 is coupled to the rotor 3 via a rotation shaft 6. A hydraulic motor 10 is connected to the hydraulic pump 8 via a high pressure line 12 and a low pressure line 14. Specifically, an outlet of the hydraulic pump 8 is connected to an inlet of the hydraulic motor 10 via the high pressure line 12, and an inlet of the hydraulic pump 8 is connected to an outlet of the hydraulic motor 10 via the low pressure line 14. The hydraulic pump 8 is driven by the rotation shaft 6 to increase the pressure of working oil, thereby producing high-pressure working oil (pressurized oil). The pressurized oil produced in the hydraulic pump 8 is supplied to the hydraulic motor 10 via the high pressure line 12, and the hydraulic motor 10 is driven by this pressurized oil. Low pressure working oil having performed work in the hydraulic motor 10 is returned again to the hydraulic pump 8 via the low pressure line 14 disposed between the outlet of the hydraulic motor 10 and the inlet of the hydraulic pump 8. In the present embodiment, a hydraulic transmission includes the hydraulic pump 8 and the hydraulic motor 10.

A generator 16 is connected to the hydraulic motor 10. In one embodiment, the generator 16 is a synchronous generator connected to a utility grid and driven by the hydraulic motor 10.

At least a part of the rotation shaft 6 is covered by a nacelle 18 disposed on a tower 19. In one embodiment, the hydraulic pump 8, the hydraulic motor 10 and the generator 16 are disposed inside the nacelle 18.

In some embodiments, at least one of the hydraulic pump 8 or the hydraulic motor 10 is a radial-piston type hydraulic machine described below.

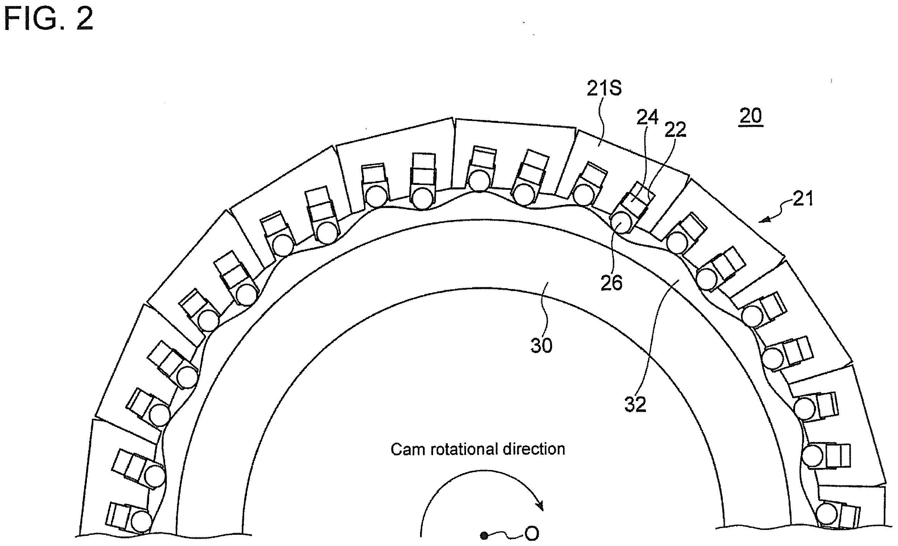

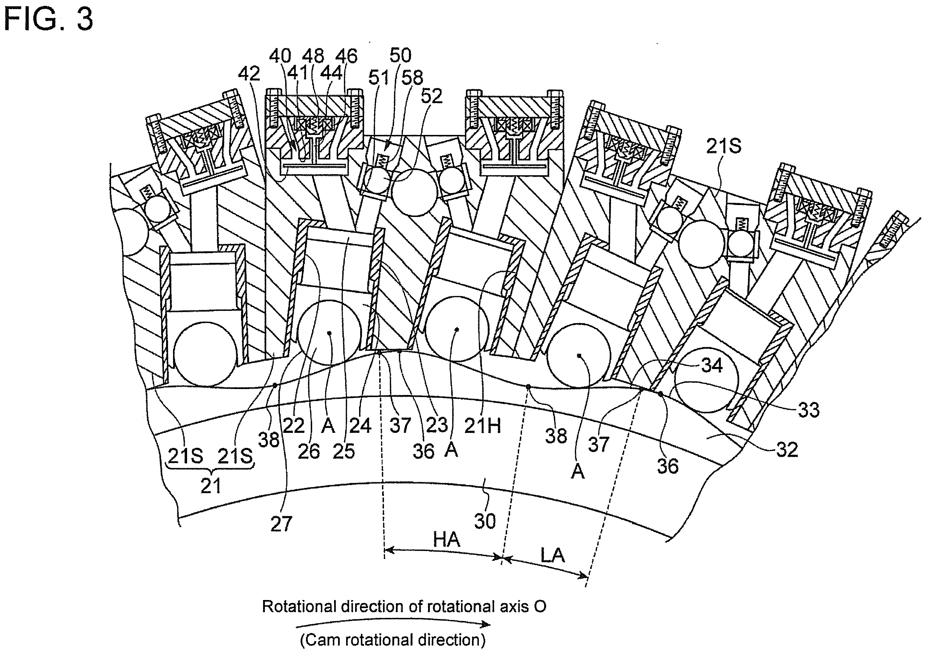

FIG. 2 is a cross sectional view of a hydraulic machine in the radial direction according to one embodiment. FIG 3 is a cross sectional view of a configuration of cylinders and their peripheral area of a hydraulic machine according to one embodiment.

The hydraulic machine 20 illustrated in FIG. 2 includes a plurality of cylinders 22, a plurality of pistons 24 disposed inside the respective cylinders 22, and rollers 26 disposed on the respective pistons 24. Further, the hydraulic machine 20 includes a rotation shaft 30 and a cam 32 configured to rotate with the rotation shaft 30.

Here, in the embodiment illustrated in FIGs. 2 and 3, an annular outward cam 32 is disposed radially outside the rotation shaft 30, and the cylinders 22, the pistons 24, and the rollers 26 are disposed further radially outside the outward cam 32. Here, an outward cam refers to a cam which has a cam surface that contacts the rollers 26 on the outer circumferential surface. In another embodiment, an annular inward cam 32 is disposed radially inside the rotation shaft 30, and the cylinders 22, the pistons 24 and the rollers 26 are disposed further radially inside the inward cam 32. Here, an inward cam refers to a cam which has a cam surface that contacts the rollers 26 on the inner circumferential surface.

The plurality of cylinders 22 is arranged in the circumferential direction of the hydraulic machine 20 inside the cylinder block 21. In one embodiment, as illustrated in FIG. 3, each cylinder 22 is formed by a cylinder sleeve 23 inserted into a sleeve hole 21H of the cylinder block 21. In another embodiment, each cylinder 22 is directly formed in the cylinder block 21 without the cylinder sleeve 23. Here, the cylinder block 21 may be divided into a plurality of segments 21S in the circumferential direction of the hydraulic machine 20.

Each piston 24 is disposed slidably inside corresponding one of the cylinders 22. Each piston 24 is guided by the corresponding cylinder 22 so as to reciprocate between a bottom dead center and a top dead center along a center axis of the cylinder 22. As a result of the reciprocating motion of the pistons 24, the volume of each working chamber that is surrounded by the corresponding cylinder 22 and the corresponding piston 24 cyclically changes.

The mode of motion is converted between the reciprocating motion of the pistons 24 accompanied by such cyclic volume change of the working chambers 25, and the rotational motion of the cam 32.

For instance, in a case where the hydraulic machine 20 is a hydraulic pump 8, rotational motion of the cam 32 rotating with the rotation shaft 30 of the hydraulic machine 20 is converted into reciprocating motion of the pistons 24 so that the volume of each working chamber 25 cyclically changes, and thereby high-pressure working oil (pressurized oil) is generated in the working chambers 25. In contrast, in a case where the hydraulic machine 20 is a hydraulic motor 10, pressurized oil is introduced into the working chambers 25 so that the reciprocating motion of the pistons 24 occurs, the reciprocating motion thereby being converted into rotational motion of the cam 32, which results in rotation of the rotation shaft 30 of the hydraulic machine 20 with the cam 32.

Accordingly, due to the function of the cam 32, energy is converted between rotational energy (mechanical energy) of the rotation shaft 30 of the hydraulic machine 20 and fluid energy of working oil, so that the hydraulic machine 20 performs the predetermined function as the hydraulic pump 8 or the hydraulic motor 10.

Each roller 26 is engaged with corresponding one of the pistons 24 so as to be rotatable about a roller rotational axis A, and a roller surface 27 of each roller 26 and a cam surface 33 of the cam 32 are arranged so as to face each other across an oil film of lubricant oil. When the cam 32 rotates about a cam center O (a center axis of the hydraulic machine 20) with the rotation shaft 30, each roller 26 travels on the cam surface 33 of the cam 32 while rotating about the roller rotational axis A.

The cam surface 33 of the cam 32 is formed by a plurality of lobes 34 arranged in the circumferential direction of the hydraulic machine 20. Each lobe 34 protrudes toward the cylinders 22. Each lobe 34 is formed by a smooth curve that passes through a pair of lowest points 38 and a single highest point 36 disposed between the pair of lowest points 38. The highest points 36 and the lowest points 38 of the lobes 34 are respectively positions on the cam surface 33 at which the distance from the rotational axis O of the hydraulic machine 20 is the maximum or the minimum. The highest points 36 are disposed closer to the cylinders 22 than the lowest points 38 are. The highest points 36 of the lobes 34 are points on the cam surface 33 that correspond to the top dead centers of the cycle of the reciprocating motion of the pistons 24. On the other hand, the lowest points 38 of the lobes 34 are points on the cam surface 33 that correspond to the bottom dead centers of the cycle of the reciprocating motion of the pistons 24.

In the embodiment illustrated in FIGs. 2 and 3, the cylinders 22 are disposed radially outside the outward cam 32. The distance (cam diameter) from the center axis (rotational axis of the hydraulic machine 20) O of the outward cam 32 reaches its maximum at the highest points 36 of the lobes 34, and the distance (cam diameter) from the center axis O reaches its minimum at the lowest points 38 of the lobes 34. In contrast, in another embodiment in which the cylinders 22 are disposed radially inside an inward cam, the distance from the center axis O of the inward cam to the cam surface 33 reaches its minimum at the highest points 36 of the lobes 34, and the distance (cam diameter) from the center axis O of the inward cam from the cam surface 33 reaches its maximum at the lowest points 38 of the lobes 34. Here, the normal of the cam surface 33 coincides with the radial direction of the hydraulic machine 20 at the highest point 36 and the lowest points 38 of each lobe 34.

In some embodiments, as illustrated in FIG. 3, the hydraulic machine 20 further includes a low pressure valve 40 disposed between each working chamber 25 and the low pressure line 14, and a high pressure valve 50 disposed between each working chamber 25 and the high pressure line 12. In a case where the hydraulic machine 20 is a hydraulic pump, the low pressure valves 40 are used to supply low pressure working oil to the working chambers 25 from the low pressure line 14, and the high pressure valves 50 are used to supply high pressure working oil generated in the working chambers 25 to the high pressure line 12. As illustrated in FIG. 3, each low pressure valve 40 may be a normal-open type electromagnetic valve including the first seat 41, the first valve body 42 that is engageable with the first seat 41, the first stem 44 coupled to the first valve body 42, a solenoid 46 configured to generate magnetic force for driving the first stem 44, and the first biasing member 48 for biasing the first valve body 42 in a direction away from the seat 41. In this case, when the solenoid 46 is magnetized, the first stem 44 moves while resisting the biasing force applied by the first biasing member 48 due to the magnetic force of the solenoid 46 so that the first valve body 42 contacts the first seat 41 and the low pressure valve 40 closes. Further, when the solenoid 46 is not magnetized, the first stem 44 moves due to the biasing force applied by the first biasing member 48 so that the first valve body 42 moves away from the first seat 41 and the low pressure valve 40 opens. Here, the first valve body 42 may be a face sealing poppet valve body.

On the other hand, in a case where the hydraulic machine 20 is a hydraulic pump, each high pressure valve 50 may be a check valve including the second seat 51, the second valve body 52 that is engageable with the second seat 51, and the second biasing member 58 for biasing the second valve body 52 in a direction toward the second seat 51, as illustrated in FIG. 3. In this case, when the pressure in the working chamber 25 increases so that a differential pressure across the second valve body 52 becomes greater than the biasing force applied by the second biasing member 58, the second valve body 52 moves away from the second seat 51 due to the differential pressure, and the high pressure valve 50 opens. Further, when the differential pressure across the second valve body 52 is less than the biasing force applied by the second biasing member 58, the second valve body 52 contacts the second seat 51 due to the biasing force applied by the second biasing member 58, and the high pressure valve 50 closes. The second valve body 52 may be a spherical valve illustrated in FIG. 3.

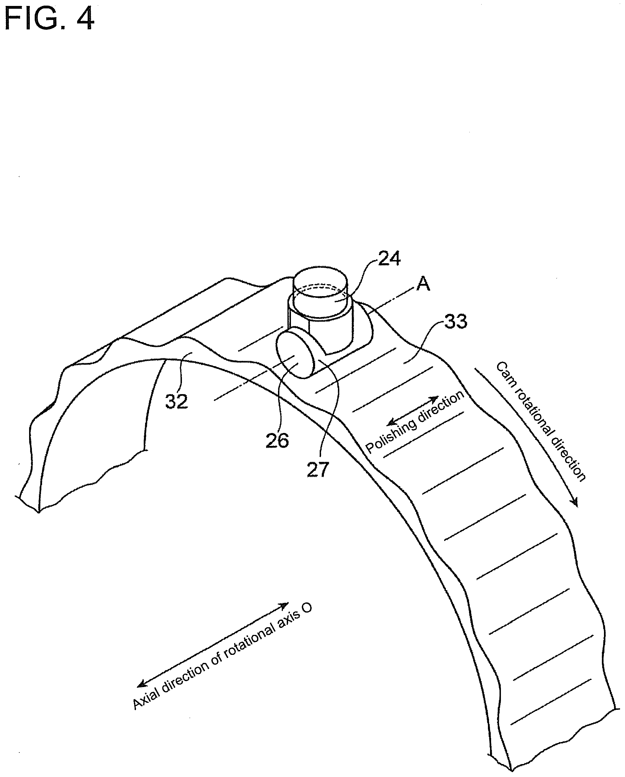

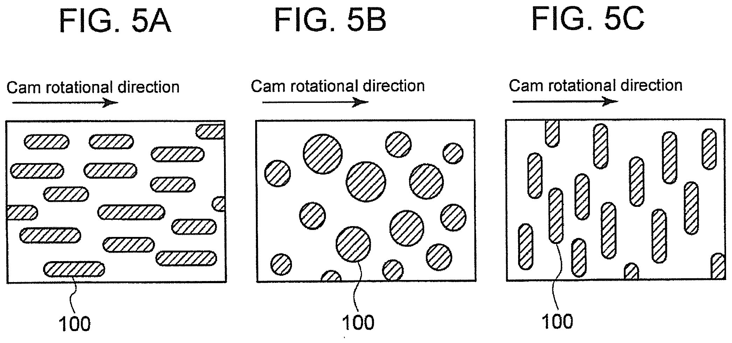

FIG. 4 is a perspective view of a roller and a cam for describing directionality (anisotropy or isotropy) of surface roughness of a roller surface and a cam surface according to one embodiment. FIGs. 5A to 5C are each a schematic diagram for describing directionality (anisotropy or isotropy) of surface roughness of a roller surface and a cam surface.

The roller surfaces 27 of the rollers 26 and the cam surface 33 of the cam 32 each have a surface roughness formed from processing during production of the rollers 26 and the cam 32. The surface roughness is formed from polishing and blast processing for instance, which will be described below.

In one embodiment, at least one of the plurality of roller surfaces 27 or the cam surface 33 has an isotropic surface roughness, or a surface roughness that has an anisotropy along a direction of the rotational axis O of the cam. The velocities of the roller surfaces 27 and the cam surface 33 accompanying rotation of the rollers 26 and the cam 32 are set so that a value A defined by the following expression is not less than zero and not more than 1.0.

$$\Lambda = t / (Ra1^2 + Ra2^2)^{0.5}$$

In the above expression, "t" is the thickness of the oil film between the roller surfaces 27 and the cam 32, Ra1 is the surface roughness of the roller surfaces 27, and Ra2 is the surface roughness of the cam surface 33.

Here, "the roller surfaces 27 or the cam surface 33 have a surface roughness that has an anisotropy along a direction of the rotational axis O of the cam" means that the length direction of the surface roughness 100 is along a direction of the rotational axis O of the cam, which is a direction orthogonal to the rotational direction of the cam (see FIG. 4), as schematically illustrated in FIG. 5C.

Further, "the roller surfaces 27 or the cam surface 33 have an isotropic surface roughness (or surface roughness that has an isotropy)" means that the surface roughness 100 does not have an anisotropy along a particular direction, as schematically illustrated in FIG. 5B.

As a result of intensive researches, the present inventors found that it is possible to maintain the thickness of the oil film between the roller surfaces and the cam if the surface roughness of the roller surfaces or the cam surface is isotropic or has an anisotropy along a direction of the rotational axis of the cam, and that the thickness of the oil film remarkably improves if the value A is in a range of not less than zero and not more than 1.0.

The reason why the thickness of the oil film can be maintained with the roller surfaces or the cam surfaces having a difference in the surface roughness such as anisotropy may be considered as follows.

Since the rollers rotate relatively to the cam surface, presence of oil between the roller surfaces and the cam surface may cause an effect to draw oil into between the roller surfaces and the cam surface in the rotational direction of the rollers and the cam.

Meanwhile, during operation of a hydraulic machine, there is a pressure distribution between the rollers and the cam along the rotational direction of the rollers and the cam. Specifically, during operation of a hydraulic machine, the rollers receive a load from the pistons and thus a relatively large pressure is generated between the rollers and the cam, particularly at a portion where the cam and the rollers are positioned closest to each other. On the other hand, at either side of the above portion along the rotational direction of the rollers and the cam, the load applied to the rollers is not functioning, and thus the pressure is relatively low. As described above, there is a difference in pressure in the rotational direction of the rollers and the cam between the closely-contacting portion of the rollers and the cam, where the pressure is relatively high, and either side of this portion, where the pressure is relatively low. Thus, the lubricant oil is urged to be discharged outward in the rotational direction (to flow backward) from between the cam and the rollers. Such movement of the lubricant oil has an effect to reduce the thickness of the oil film between the rollers and the cam. To maintain the oil film between the rollers and the cam, it is desirable to restrict the backward flow caused by the above differential pressure in the rotational direction of the rollers and the cam.

Here, the roller surfaces and the cam surface normally have a surface roughness formed from processing during production (for instance, lathe processing or polishing). If such a surface roughness has an anisotropy along the rotational direction of the rollers and the cam, the lubricant oil forming the oil film may escape along a direction of the surface roughness from between the cam and the rollers due to the above differential pressure.

On the other hand, if the surface roughness has an anisotropy along a direction of the rotational axis of the cam (a direction orthogonal to the rotational direction), the surface roughness is not along the direction of the differential pressure. Thus, the lubricant oil is unlikely to escape in the rotational direction of the cam, which makes it possible to restrict the backflow caused by the above differential pressure. As a result, it is considered that the thickness of the oil film between the cam and the rollers can be maintained. It can be considered similarly in a case where the surface roughness is isotropic. In this case, it is considered that there is an effect to restrict the backflow of the lubricant oil as compared to a case in which the surface roughness has an anisotropy along the rotational direction of the cam and the rollers.

Therefore, when surface roughnesses of the same size are compared, the thickness of the oil film can be improved in a case where the surface roughness has an anisotropy along the direction of the rotational axis of the cam or where the surface roughness is isotropic, as compared to a case where the surface roughness has an anisotropy along the direction of the cam rotational direction.

Further, from the studies of the influence of the value A on the effect to improve the thickness of the oil film achieved by the anisotropy or isotropy of the surface roughness of the cam surface or the roller surfaces, it was found that a smaller value A obtains a greater effect if the surface roughness has an anisotropy along the direction of the rotational axis of the cam or if the surface roughness is isotropic, and the effect is remarkable in a range where the value Λ is not less than zero and not more than 1.0.

In a range where the value Λ is relatively large, the thickness of the oil film is adequately secured with respect to the surface roughness, and thus there is considered to be small influence of the anisotropy or isotropy of the surface roughness on the thickness of the oil film. In contrast, in a range where the value Λ is relatively small, the thickness of the oil film is relatively small with respect to the surface roughness, and thus there is considered to be large influence of the anisotropy or isotropy of the surface roughness on the thickness of the oil film.

However, as to the track surface (e.g. cam surface) and rolling surfaces (e.g. roller surfaces) of the rolling elements which roll on the track surface, a rolling condition of a typical rolling element is rolling within a range where the value Λ is greater than 1. Thus, the effect to improve the thickness of the oil film achieved by the anisotropy or isotropy of the roughness in a low-Λ range where the value Λ is not greater than 1 has not been made clear. As a result of intensive researches of the present inventors, it was found that the thickness of the oil film remarkably improves if the surface roughness of the cam surface or the roller surfaces has an anisotropy along the direction of the rotational axis of the cam or is isotropic, in a case where the value Λ is not more than 1.0.

With the above hydraulic machine 20, at least one of the plurality of roller surfaces 27 or the cam surface 33 facing each other across the oil film of the lubricant oil has an isotropic surface roughness or a surface roughness that has an anisotropy along the direction of the rotational axis O of the cam. Further, the velocities of the roller surfaces 27 and the cam surface 33 which accompany rotation of the rollers 26 and the cam 32 are set so that the value Λ is not less than zero and not more than 1.0. Thus, it is possible to improve the thickness of the oil film between the roller surfaces 27 and the cam surface 33 as compared to a case in which the at least one of the plurality of roller surfaces 27 or the cam surface 33 has a surface roughness along the rotational direction (direction orthogonal to the rotational axis O of the cam) of the cam 32. As described above, improving the thickness of the oil film between the roller surfaces 27 and the cam surface 33 makes it possible to restrict degradation of the roller surfaces 27 or the cam surface 33, which makes it possible to improve the lifetime of the rollers 26 or the cam 32.

An oil that is generally used as a lubricant oil can be used as the lubricant oil forming the oil film between the roller surfaces 27 and the cam surface 33 without particular limitation.

In general, the higher the kinetic viscosity of the lubricant oil is, the easier it is to increase the thickness of the oil film. Thus, it will be understood that an oil with a relatively high kinetic viscosity can be used as the lubricant oil.

In one embodiment, the hydraulic machine 20 is configured such that, when the lubricant oil has a kinetic viscosity of 35.0 to 55.0mm$^2$/s at a temperature of 40°C, the thickness of the oil film is larger than that in a case where the at least one of the plurality of roller surfaces 27 or the cam surface 33 is a mirrored surface.

In a case where a rolling surface such as the roller surfaces and the cam surface is mirrored to have an extremely small surface roughness, the lubricant performance of the lubricant oil normally improves. However, with the above configuration of the hydraulic machine 20, it is also possible to improve the thickness of the oil film between the roller surfaces 27 and the cam surface 33 in a case where an oil that has a relatively low viscosity for a lubricant oil is used as the lubricant oil.

In one embodiment, as illustrated in FIG. 4, the at least one of the plurality of roller surfaces 27 or the cam surface 33 has a polishing direction along the rotational axis O of the cam, and a surface roughness that has an anisotropy in the same direction as the polishing direction.

Here, polishing includes mechanical polishing, chemical polishing, electrical polishing, and combination of at least two of the above.

For instance, in a case where the cam 32 is mechanically polished, the cam 32 may be shaped in a grinding step where a grinding material is used, and then the cam surface 33 may undergo a polishing step including lapping and final polishing (for instance, buffing) where an abrasive agent is used. In the polishing step, a rotating abrasive material is brought into contact with the cam surface 33 to smooth the cam surface 33. At this time, the polishing direction (rotational direction of the abrasive material) is set along the direction of the rotational axis O. Here, in a case where a plurality of polishing steps including lapping and final polishing is performed, the abrasive material is moved in the above direction in at least one of the polishing steps so that slight grooves are formed on the cam surface 33 from the polishing along the direction of the rotational axis O at the end. Alternatively, in a case where the cam surface 33 is polished in the grinding step to such an extent that the cam surface 33 retains slight grooves, the moving direction of the grinding material may be the direction along the rotational axis O. Further, in a case where super finish is performed in the final polishing, solution processing, powder-spraying, or the like may be employed. In the super finish, the cam surface 33 may be polished so that the surface roughness Ra becomes 0.06 or less. In this case, the cam surface 33 may include dimples or have an isotropy as described below to secure an oil film of an adequate thickness on the cam surface 33. It will be understood that normal polishing may be performed in the final polishing.

Further, the polishing direction of the roller surfaces 27 or the cam surface 33 may have an isotropy. For instance, the cam surface 33 is immersed in a solvent and then melted by a chemical reaction to be smoothed. In this way, the cam surface 33 would not have a particular polishing direction but have an isotropy.

As described above, with the polishing direction of the cam surface 33 having an isotropy, it is possible to securely form an oil film on the contact part between the cam surface 33 and the rollers 26, which makes it possible to maintain good lubricity of the cam 32 and the roller 26.

Further, a plurality of dimples may be formed on the roller surfaces 27 or the cam surface 33. For instance, a plurality of dimples is formed by grinding the surface of the cam surface 33 by final polishing after slight grooves are formed along a direction different from the rotational direction of the rotational axis O by rough polishing.

In this way, the lubricant oil is retained inside the plurality of dimples formed on the cam surface 33, which makes it possible to securely form an oil film on the contact part between the cam surface 33 and the rollers 26, which makes it possible to maintain good lubricity of the cam 32 and the rollers 26.

In a case where the roller surfaces 27 or the cam surface 33 have an isotropic surface roughness, the surface roughness may be formed by performing blast processing on the roller surfaces 27 or the cam surface 33.

The conditions for performing the blast processing such as the type of an abrasive material, propelling speed, propelling angle, and the amount of the abrasive material in the blast processing are not particularly limited. These conditions may be optionally determined based on the conditions such as materials constituting the rollers 26 and the cam 32.

Further, in some embodiments, the surface roughness Ra of the plurality of roller surfaces 27 or the cam surface 33 is not less than 0.1 and not more than 0.3.

As described above, with the surface roughness Ra of the plurality of roller surfaces 27 or the cam surface 33 being not less than 0.1 and not more than 0.3, it is possible to maintain good lubricity between the rollers 26 and the cam 32 while retaining an adequate thickness for the oil film of the lubricant oil between the rollers 26 and the cam 32.

In some embodiments, one of the plurality of roller surfaces 27 or the cam surface 33 is constituted by a coating containing a coating material that is harder than a material of the other one of the plurality of roller surfaces 27 or the cam surface 33.

As described above, one of the plurality of roller surfaces 27 or the cam surface 33 that is constituted by a coating containing a coating material with high hardness polishes the other one, so that the surface roughness of the other one improves (i.e., the surface roughness Ra decreases), which results in an increase in the value Λ defined by the above expression. Thus, it is possible to improve the thickness of the oil film between the roller surfaces 27 and the cam surface 33 and to restrict degradation of the roller surfaces 27 or the cam surface 33, which makes it possible to improve the lifetime of the rollers 26 or the cam 32.

As a method of forming a film of a coating, chemical vapor deposition (CVD) such as heat CVD and plasma CVD, physical vapor deposition (PVD) such as sputtering and ion plating may be employed, for instance.

In some embodiments, among the roller surfaces 27 and the cam surface 33, the roller surfaces 27 may be constituted by the above coating.

In this case, if damage such as detachment of the coating has occurred to a coated portion, only the roller 26 with the damage needs to be replaced. Each roller 26 is relatively smaller than the cam 32, and thus replacement of a roller 26 is easier than that of the cam 32. Thus, maintainability of the hydraulic machine is improved. Further, since the rollers 26 which are normally smaller in size than the cam 32 are coated, the coating process is easier than coating the cam 32.

In some embodiment, the coating material may be diamond-like carbon (DLC).

DLC is an amorphous material mainly containing hydrocarbon or allotropes of carbon, and characterized in that it can form a hard film. Using DLC as a coating material makes it possible to obtain a structure that is unlikely to be damaged for the coated roller surfaces 27 or cam surface 33, and makes it easier to improve the surface roughness of the other one of the plurality of roller surfaces 27 or the cam surface 33.

As a coating method in a case where DLC is used as a coating material, the plasma CVD can be employed, for instance. In this case, the DLC coating can be formed into a film by using a hydrocarbon gas such as acetylene as a raw material, turning the raw material gas into plasma in a chamber, and then performing vapor deposition on the roller surfaces 27 or the cam surface 33 with the vapor-phase hydrocarbon, for instance.

In some embodiments, the plurality of roller surfaces 27 is constituted by a coating containing DLC, and the cam surface 33 is constituted by a bearing steel.

The bearing steel is a steel material (an SUJ material) which contains approximately 0.95 to 1.10% of carbon (C) and approximately 0.9 to 1.6% of chrome (Cr), and excels in a load-bearing property, a wear-resistant property, a quenching property, an erosion-resistant property or the like required for a material of a slide bearing and a roller bearing. The bearing steel is often used as a bearing material for balls, rollers, inner races, outer races or the like of roller bearings. However, its usage is not limited to bearings and may be used for various kinds of members. The characteristics of the bearing steel can be controlled in accordance with the usage by adjusting the content of the constituent elements by type. For instance, if approximately 0.90 to 0.70% of manganese (Mn) is contained, it is possible to obtain a material suitable for a relatively thick member. Further, if approximately 0.10 to 0.25% of molybdenum (Mo) is contained, it is possible to obtain a material with improved strength and hardness under a high temperature.

In some embodiments, it is possible to reduce the surface roughness of uncoated one of the plurality of roller surfaces 27 or the cam surface 33, by operating the hydraulic machine 20.

In this case, it is possible to reduce the surface roughness of one (uncoated one) of the plurality of roller surfaces 27 or the cam surface 33 with the other one of the plurality of roller surfaces 27 or the cam surface33 that is constituted by a coating containing a coating material with high hardness, by operating the hydraulic machine 20. As a result, the value Λ defined by the above expression increases. Thus, it is possible to improve the thickness of the oil film between the roller surfaces 27 and the cam surface 33 and to restrict degradation of the roller surfaces 27 or the cam surface 33, which makes it possible to improve the lifetime of the rollers 26 or the cam 32.

Meanwhile, in the above hydraulic machine 20, the pistons 24 are configured to reciprocate in the cylinders 22 by the rollers 26 rolling on the cam surface 33. However, the rollers 26 may occasionally slip on the cam surface 33, in case of which galling or smearing may occur.

In view of this, in some embodiments, to prevent slip between the cam surface 33 and the rollers 26, the friction coefficient of the rollers 26 with respect to the cam surface 33 is set to be greater than the friction coefficient of the rollers 26 with respect to the pistons 24. In this way, the rollers 26 smoothly roll on the cam surface 33 without slipping, which makes it possible to prevent occurrence of a trouble such as galling and smearing. Thus, it is possible to further increase the lifetime of the cam 32.

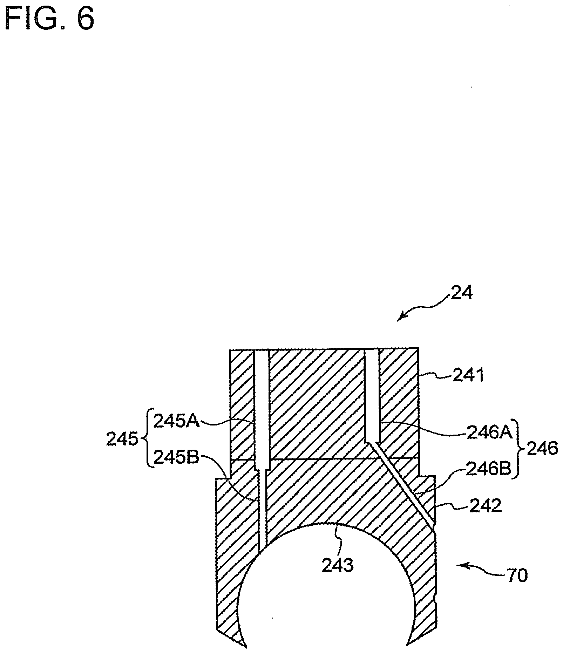

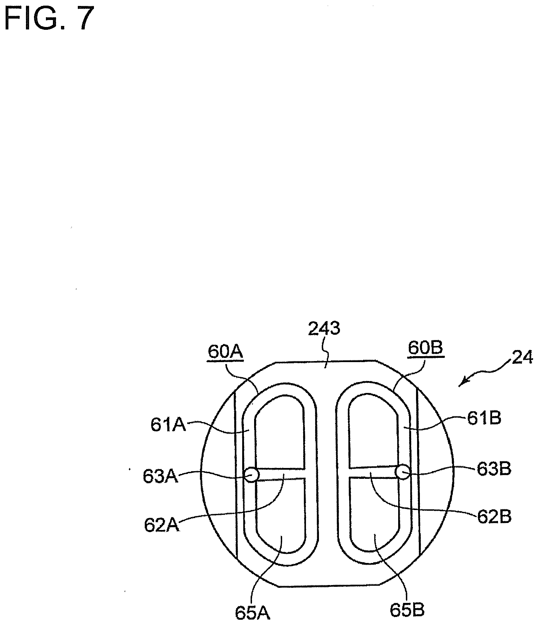

Here, FIG. 6 is a cross sectional view of a piston according to one embodiment. FIG. 7 is a view of the piston in FIG. 6 as seen from inside of a cam in the radial direction.

In one embodiment, as illustrated in FIG. 6, each piston 24 includes a piston-receiving surface (roller sliding surface) 243 that receives the roller 26, and a lubricant-oil supply channel 245 for supplying working oil in the working chamber 25 as a lubricant oil to the piston-receiving surface 243. In this case, a hydrostatic bearing may be formed on the piston-receiving surface (roller sliding surface) 243. A hydrostatic bearing is caused to function by working oil in the working chamber 25 supplied to hydrostatic pads 60A, 60B disposed on the piston-receiving surface (roller sliding surface) 243 of the piston 24. The configuration of the hydrostatic bearing will be described later in detail.

With the above configuration, the hydraulic working oil in the working chamber 25 is supplied as a lubricant oil to the piston-receiving surface 243 via the lubricant-oil supply channel 245. Thus, it is unnecessary to provide a special lubricant oil separately from the working oil, and a structure for supplying the special lubricant oil is also unnecessary, which makes it possible to efficiently lubricate the roller 26 with respect to the piston 24 and to the cam 32.

When the pressure of the working oil in the working chamber 25 is high, the load capability of the hydrostatic pads 60A, 60B is high and thus the piston-receiving surface 243 and the roller 26 are in fluid-lubrication. Thus, the friction coefficient of the roller 26 with respect to the piston-receiving surface 243 is extremely low. On the other hand, while there is lubricant oil between the cam surface 33 and the roller 26, no hydrostatic bearing is provided. Thus, when the piston-receiving surface 243 and the roller 26 are in fluid lubrication, the friction coefficient of the roller 26 with respect to the cam surface 33 is normally larger than the friction coefficient of the roller 26 with respect to the piston-receiving surface 243 with the intervening hydrostatic bearing. To have the roller 26 roll on the cam surface 33 smoothly, it is necessary to have the outer circumferential surface of the roller 26 slide smoothly on the piston-receiving surface 243 of the piston 24. Thus, when the roller 26 and the piston-receiving surface 243 are in fluid lubrication, the roller 26 smoothly rolls on the cam surface 33.

However, when the pressure of the working oil in the working chamber 25 is low, the load capability of the hydrostatic pads 60A, 60B decreases so that the piston-receiving surface 243 and the roller 26 move closer to the boundary lubrication. At this time, if the friction coefficient of the roller 26 with respect to the piston-receiving surface 243 is greater than the friction coefficient of the roller 26 with respect to the cam 32, the roller 26 may not slide smoothly on the piston-receiving surface 243 of the piston 24, which may cause the roller 26 to slip also on the cam surface 33.

In this regard, as described above, the friction coefficient of the roller 26 with respect to the cam surface 33 is set to be greater than the friction coefficient of the roller 26 with respect to the piston 24 even in a case where the piston 24 has a hydrostatic bearing. As a result, the roller 26 rolls on the cam surface 33 without slipping even in the low-pressure region LA, which makes it possible to prevent a trouble such as galling and smearing.

Here, the hydrostatic bearing of the piston 24 will be described in detail.

The piston 24 illustrated in FIG. 6 includes a working-chamber forming part 241 and a roller holding part 242. The working-chamber forming part 241 is configured to reciprocate in the cylinder 22 and forms the working chamber 25 with the cylinder 22. On the other hand, the roller holding part 242 rotatably holds the roller 26 and has the piston-receiving surface (roller slide surface) 243 which engages with the roller 26. The piston-receiving surface 243 is formed as a curved surface that has a curvature substantially equal to or slightly larger than that of the roller 26 so as to conform to the outer circumferential surface of the roller 26. The piston-receiving surface 243 is arranged so as to partially surround the outer circumferential surface of the roller 26. The piston 24 is configured to reciprocate in the cylinder 22 upon receiving pressing force from the cam 32 via the roller 26. Here, to secure durability for withstanding the pressing force from the cam 32, the roller holding part 242 may be formed to have a greater diameter than the working-chamber forming part 241.

Further, the lubricant-oil supply channel 245 through which working oil from the working chamber 25 flows is disposed inside the piston 24. Two or more lubricant-oil supply channels 245 may be disposed inside the piston 24. For instance, there are two lubricant-oil supply channels 245 in FIG. 6 arranged in the width direction of the roller 26, which is the depth direction of the drawing. Each lubricant-oil supply channel 245 includes the first flow-channel portion 245A and the second flow-channel portion 245B. The first flow-channel portion 245A is formed so as to have one end with an opening to the working chamber 25 at one end to penetrate the working-chamber forming part 241 in the axial direction of the piston 24. The second flow-channel portion 245B is formed so as to have one end communicating with the first flow-channel portion 245A to penetrate through the roller holding part 242 and the other end with an opening at the piston-receiving surface (roller slide surface) 243. Here, each lubricant-oil supply channel 245 may include an orifice for adjusting the flow rate of working oil supplied from the working chamber 25.

As illustrated in FIG. 7, the piston-receiving surface 243 of the piston 24 includes at least one hydrostatic pad 60A, 60B. Each hydrostatic pad 60A, 60B includes an annular groove 61A, 61B communicating with the working chamber 25 via the lubricant-oil supply channel 245 formed inside the piston 24 and a land 65A, 65B surrounded by the annular groove 61A, 61B. In the drawing, each hydrostatic pad 60A, 60B includes a communication groove 62A, 62B formed along the rotational direction of the roller 26 so as to run across the annular groove 61A, 61B, for example. Thus, two lands 65A, 65B are disposed inside each annular groove 61A, 61B. Further, the lubricant-oil supply channel 245 communicates with each of supply openings 63A, 63B disposed on the communication grooves 62A, 62B. The working oil is supplied to the communication groove 62A, 62B of the groove 61A, 61B via the lubricant-oil supply channel 245 from the working chamber 25. The working oil supplied from the lubricant-oil supply channel 245 is guided to different positions on the annular grooves 61A, 61B via the communication grooves 62A, 62B.

According to the above configuration, the hydrostatic bearing is formed on the piston-receiving surface (roller slide surface) 243 of the piston 24. Specifically, when the roller 26 rotates, the working oil in the annular grooves 61A, 61B and the communication grooves 62A, 62B is drawn onto the piston-receiving surface 243 so that hydrostatic pressure due to hydraulic pressure is generated. This hydrostatic pressure due to hydraulic pressure supports the large load applied to the roller 26 from the cam 32. It is possible to maintain the hydrostatic pressure due to hydraulic pressure by replenishing working oil to the hydrostatic pads 60A, 60B by the amount that has been drawn onto the engaging surface 30 from the annular grooves 61A, 61B and the communication grooves 62A, 62B.

The piston 24 may include a hydrostatic pad 70 on a slide surface with respect to the cylinder 22. In this case, as illustrated in FIG. 6, the piston 24 includes an interior flow channel 246 through which the working oil from the working chamber 25 flows. This interior flow channel 246 includes the first flow-channel portion 246A and the second flow-channel portion 246B. The first flow-channel portion 246A is formed so as to have an end that has an opening to the working chamber 25 to penetrate the working-chamber forming part 241 in the axial direction of the piston 24. The second flow-channel portion 246B is formed so as to have one end communicating with the first flow-channel portion 246A to penetrate through the roller holding part 242 and the other end that has an opening at a surface of the piston 24 that slides with respect to the inner circumferential surface of the cylinder 22. A hydrostatic pad 70 including annular grooves similarly to FIG. 7 is disposed on the surface of the piston 24 that slides with respect to the inner circumferential surface of the cylinder 22, and the working oil is supplied to the hydrostatic pad 70 from the working chamber 25 via the interior flow channel 246. Accordingly, a hydrostatic bearing is formed between the inner circumferential surface of the cylinder 22 and the outer circumferential surface of the piston 24.

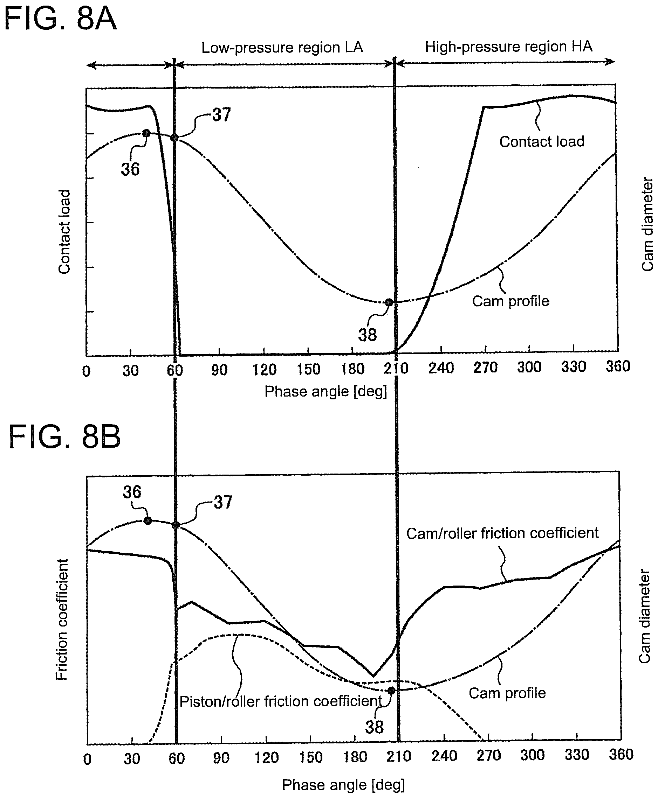

As illustrated in FIGs. 3, 8A, and 8B, in one embodiment, the cam surface 33 has a high-pressure region HA and a low-pressure region LA. The high-pressure region HA includes a section of the cam surface 33 which faces the roller surface 27 in a period when the pressure in the working chamber 25 is relatively high. The low-pressure region LA includes a section of the cam surface 33 which faces the roller surface 27 in a period when the pressure in the working chamber 25 is relatively low. Each of the above periods is a part of a cycle during which the piston 24 reciprocates in the cylinder 22. In other words, the cam surface 33 includes a high-pressure region HA where a contact load between the cam 32 and the roller 26 is high, and a low-pressure region LA where a contact load between the cam 32 and the roller 26 is low. Here, FIG. 8A is a graph indicating a cam profile and a contact load according to one embodiment, and FIG. 8B is a graph indicating a cam profile, a cam/roller friction coefficient and a piston/roller friction coefficient according to one embodiment.

In a case where the hydraulic machine 20 is a hydraulic pump, the roller 26 is positioned at the highest point 36 of the cam surface 33 when the piston 24 is at the top dead center. In the cam profile illustrated in FIGs. 8A and 8B, the highest point 36 is a position where the cam diameter reaches its maximum. On the other hand, when the piston 24 is at the dead bottom center, the roller 26 is positioned at the lowest point 38 of the roller 26. In the cam profile illustrated in FIGs. 8A and 8B, the lowest point 38 is a position where the cam diameter reaches its minimum. The pressure of the working oil in the working chamber 25 is basically high while the piston 24 is moving from the bottom dead center toward the top dead center, i.e., while the roller 26 is in the high-pressure region HA of the cam surface 33. In contrast, when the roller 26 is in the low-pressure region LA of the cam surface 33, the pressure of the working oil in the working chamber 25 is low. Here, in a case where the hydraulic machine 20 is a hydraulic pump, as illustrated in FIG.3, the high-pressure region HA basically is a downstream region in the cam rotational direction of the highest point 36 of each lobe 34, and the low-pressure region LA is an upstream region in the cam rotational direction of the highest point 36 of each lobe 34. Taking account of the opening/closing timing of the high pressure valves 50 and the low pressure valves 40, the high-pressure region HA and the low-pressure region LA may be set across a switching point 37 which is offset toward the downstream side from the highest point 36 with respect to the moving direction of the roller 26 with respect to the cam surface 33.

On the other hand, in a case where the hydraulic machine 20 is a hydraulic motor, the piston 24 is moving from the top dead center toward the bottom dead center and the pressure of the working oil in the working chamber 25 is basically high when the roller 26 is in the high-pressure region HA of the cam surface 33. In contrast, when the roller 26 is in the low-pressure region LA of the cam surface 33, the piston 24 is moving from the bottom dead center toward the top dead center, and the pressure of the working oil in the working chamber 25 is basically low. Here, in a case where the hydraulic machine 20 is a hydraulic motor, the high-pressure region HA is basically an upstream region in the cam rotational direction of the highest point 36 of each lobe 34, and the low-pressure region LA is basically a downstream region in the cam rotational direction of the highest point 36 of each lobe 34.

In one embodiment, the surface roughness of the low-pressure region LA is greater than the surface roughness of the high-pressure region HA on the cam surface 33. In a case where the working oil from the working chamber 25 is used to lubricate the sliding part between the piston 24 and the roller 26, the working oil is securely supplied to the slide part between the piston 24 and the roller 26 while the roller 26 is in the high-pressure region HA of the cam surface 33 so that the friction coefficient between the piston 24 and the roller 26 remarkably decreases. On the other hand, while the roller 26 is in the low-pressure region LA of the cam surface 33, the pressure of the working oil in the working chamber 25 is small and thus the working oil supplied to the slide part between the piston 24 and the roller 26 is not adequate, which leaves the friction coefficient between the piston 24 and the roller 26 large. Thus, slip between the roller 26 and the cam surface 33 is more likely to occur when the roller 26 is in the low-pressure region LA of the cam surface 33 than when the roller 26 is in the high-pressure region HA of the cam surface 33.

In view of this, the surface roughness Ra of the low-pressure region LA of the cam surface 33 is set to be larger than the surface roughness RA of the high-pressure region HA. In this case, the friction coefficient in each region is as illustrated in FIG. 8B. Specifically, in the high-pressure region HA, the friction coefficient between the cam 32 and the roller 26 ("cam/roller friction coefficient" in FIG. 8B) is originally larger than that in the low-pressure region LA because the contact load between the cam 32 and the roller 26 is large. At this time, the friction coefficient between the piston 24 and the roller 26 ("piston/roller friction coefficient" in FIG. 8B) is extremely low because the hydrostatic bearing appropriately functions. Thus, the friction coefficient between the cam 32 and the roller 26 becomes larger than the friction coefficient between the piston 24 and the roller 26, so that the roller 26 smoothly rolls on the cam surface 33.

On the other hand, in the low-pressure region LA, the contact load between the cam 32 and the roller 26 is small, but the friction coefficient between the cam 32 and the roller 26 increases because the surface roughness Ra of the cam surface 33 is set to be larger than that in the high-pressure region HA. Thus, even if the hydrostatic bearing of the piston 24 is not appropriately functioning, the friction coefficient between the cam 32 and the roller 26 becomes larger than that between the piston 24 and the roller 26, so that the roller 26 smoothly rolls on the cam surface 33 also in the low-pressure region LA.

With the above configuration, it is possible to secure an adequate friction coefficient between the roller 26 and the cam surface 33 (low pressure region LA), and to prevent slip between the roller 26 and the cam 32, which is likely to occur when the roller 26 is in the low-pressure region LA of the cam surface 33. As a result, it is possible to improve durability against smearing, galling or the like due to slip. Further, since the surface roughness Ra of the cam surface 33 has a distribution so that the surface roughness of the high-pressure region HA is selectively reduced, it is possible to avoid excessive design compared to a case where the surface roughness of the entire cam surface 33 is evenly reduced, which makes it possible to prevent a size increase of the hydraulic machine 20 and to improve reliability of the hydraulic machine 20.

As described above, with the above embodiment, at least one of the plurality of roller surfaces 27 or the cam surface 33 arranged so as to face each other across the oil film of the lubricant oil has an isotropic surface roughness or a surface roughness that has an anisotropy along the direction of the rotational axis O of the cam, and the velocities of the roller surfaces 27 and the cam surface 33 accompanying rotation of the rollers 26 and the cam 32 are set so that the value Λ is in not less than zero and not more than 1.0. Thus, it is possible to improve the thickness of the oil film between the roller surfaces 27 and the cam surface 33 as compared to a case in which the at least one of the plurality of roller surfaces 27 or the cam surface 33 has a surface roughness along the rotational direction (direction orthogonal to the rotational axis O of the cam) of the cam 32. As described above, improving the thickness of the oil film between the roller surfaces 27 and the cam surface 33 makes it possible to restrict degradation of the roller surfaces 27 or the cam surface 33, which makes it possible to improve the lifetime of the rollers 26 or the cam 32.

As a result of intensive researches of the present inventors, the following qualitative findings have been obtained with regard to the hydraulic machine according to the above embodiment.

That is, with respect to difference in directionality (isotropic or anisotropic) of the surface roughness of the cam surface or the roller surface, and to the change in the value Λ, the thickness of the oil film between the cam and the roller changes respectively as described in the (i) to (iii) below.

(i) In a case where the cam surface or the roller surfaces have a surface roughness that is isotropic (isotropic roughness) or a surface roughness along the direction orthogonal to the rolling direction (orthogonal roughness), the oil film ratio tends to increase as the value Λ decreases.

(ii) Regardless of the magnitude of the value Λ, in a case where the cam surface or the roller surfaces have an orthogonal roughness or an isotropic roughness, the oil film ratio is greater than that in a case where the cam surface or the roller surfaces have a surface roughness along the rolling direction (parallel roughness).

(iii) In a case where the cam surface or the roller surfaces have an orthogonal roughness or an isotropic roughness, there is a remarkable increasing trend of the oil film ratio in a range where the value Λ is not less than zero and not more than 1.0.

Here, the oil film ratio refers to a ratio of the thickness of an oil film between roller surfaces and a cam surface having a certain surface roughness (orthogonal roughness, parallel roughness or isotropic roughness), to the thickness of an oil film between roller surfaces and a cam surface in a case where the roller surfaces and the cam surface are mirrored surfaces, under a condition where the value Λ is the same.

Then, the qualitative findings achieved as described above have been validated by analysis.

As a method for taking account of the surface roughness, the flow rate relationship between a mirrored surface and a rough surface was statistically obtained in advance, and then the analysis was conducted using a method which substitutes the relationship with a coefficient in a dominant equation (average flow model). The dominant equation for taking account of the influence of roughness is the Reynolds equation, where the effect of roughness is represented by coefficients of $\Phi_x$, $\Phi_y$. The $\Phi_x$, $\Phi_y$ are referred to as pressure flow-rate coefficients, indicating the flow rate ratio between a rough surface and a mirrored surface. It is possible to obtain $\Phi_x$, $\Phi_y$ analytically, and it is also possible to organize the analytic result into a form of the oil film ratio.

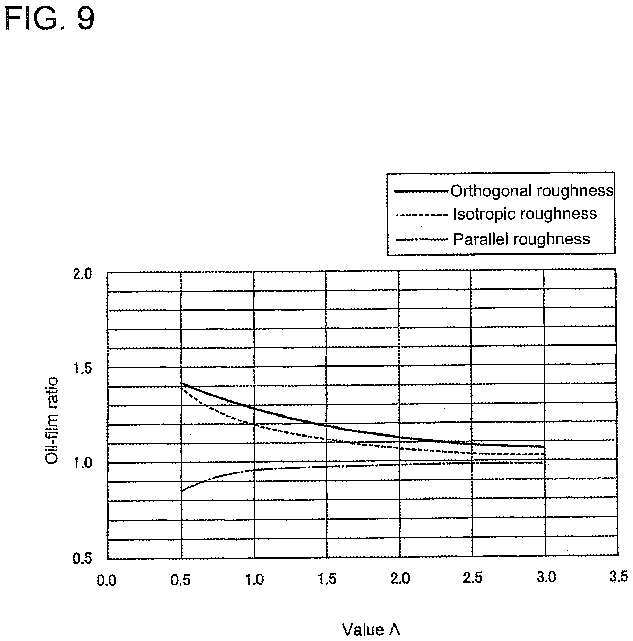

The analysis result of the oil film ratio obtained by the above analysis is illustrated in FIG. 9.

FIG. 9 is a graph indicating a relationship between directionality (anisotropic or isotropic) of a surface roughness of the cam surface and the roller surfaces with respect to the oil film ratio obtained by the above analysis.

In the graph of FIG. 9, in a case where the cam surface or the roller surfaces have an orthogonal roughness or an isotropic roughness, the oil film ratio increases as the value Λ decreases. Further, regardless of the magnitude of the value Λ, in a case where the cam surface or the roller surfaces have an orthogonal surface roughness or an isotropic surface roughness, the oil film ratio is greater than that in a case where the cam surface or the roller surface have a parallel roughness. Still further, in a case where the cam surface or the roller surfaces have an orthogonal roughness or an isotropic roughness, there is a remarkable increasing trend of the oil film ratio in a region with a low value Λ where the value Λ is not less than zero and not more than 1.0.

In other words, the features described in the above (i) to (iii) have been confirmed by the numerical analysis as well. The present invention was made based on the findings confirmed as described above.

Embodiments of the present invention were described in detail above, but the present invention is not limited thereto, and various amendments and modifications may be implemented within a scope that does not depart from the present invention as defined by the appended claims.

**Claims**

1. A radial-piston type hydraulic machine (20), comprising:

   at least one piston (24) arranged along a radial direction of the hydraulic machine (20); a roller (26) disposed rotatably on the piston (24), the roller (26) having a roller surface (27); and a cam (32) having a cam surface (33) which is disposed so as to face the roller surface (27) across an oil film of a lubricant oil, the cam (32) being configured to be rotatable, **characterized in that** at least one of the roller surface (27) or the cam surface (33) has an isotropic surface roughness or a surface roughness having an anisotropy along a direction of a rotational axis (O) of the cam (32), and **in that** velocities of the roller surface (27) and the cam surface (33) accompanying rotation of the roller (26) and the cam (32) are set so that a value Λ is not less than zero and not more than 1.0, the value Λ being defined by a following equation:

$$\Lambda = t / \left(Ra1^2 + Ra2^2\right)^{0.5}$$

, where "t" is a thickness of the oil film, "Ra1" is a surface roughness of the roller surface (27), and "Ra2" is a surface roughness of the cam surface (33).

2. The radial-piston type hydraulic machine according to claim 1, which is configured so that, when the lubricant oil has a kinetic viscosity of 35.0 to 55.0 mm$^2$/s at a temperature of 40°C, the oil film has a thickness larger than that in a case where the one of the roller surface (27) or the cam surface (33) is a mirrored surface.

3. The radial-piston type hydraulic machine according to claim 1 or 2,
wherein the one of the roller surface (27) or the cam surface (33) has a polishing direction along the rotational axis (O), and the surface roughness has an anisotropy along the same direction as the polishing direction.

4. The radial-piston type hydraulic machine according to claim 1 or 2, wherein the one of the roller surface (27) or the cam surface (33) has the isotropic surface roughness, and the surface roughness is formed by performing a blast processing at least on the one of the roller surface (27) or the cam surface (33).

5. The radial-piston type hydraulic machine according to any one of claims 1 to 4,
wherein the surface roughness Ra of the one of the roller surface (27) or the cam surface (33) is not less than 0.1 and not more than 0.3.

6. The radial-piston type hydraulic machine according to any one of claims 1 to 5,
wherein at least one of the roller surface (27) or the cam surface (33) is constituted by a coating which contains a coating material having a hardness higher than a material included in other one of the roller surface (27) or the cam surface (33).

7. The radial-piston type hydraulic machine according to claim 6,
wherein the roller surface (27) is constituted by the coating containing the coating material.

8. The radial-piston type hydraulic machine according to claim 6 or 7,
wherein the coating material is diamond-like carbon.

9. The radial-piston type hydraulic machine according to any one of claims 6 to 8,
wherein the roller surface (27) is constituted by the coating containing the diamond-like carbon, and the cam surface (33) is constituted by a bearing steel.

10. The radial-piston type hydraulic machine according to any one of claims 6 to 9,
wherein it is possible to reduce the surface roughness of the other one of the roller surface (27) or the cam surface (33) by operating the hydraulic machine.

11. The radial-piston type hydraulic machine according to any one of claims 1 to 10, further comprising a cylinder (22) for reciprocably guiding the at least one piston (24) along the radial direction,
wherein the piston (24) includes a piston receiving surface (243) which receives the roller (26), and a lubricant-oil supply channel (245) for supplying working oil in a working chamber (25) surrounded by the piston (24) and the cylinder (22) as the lubricant oil to the piston receiving surface (243).

12. The radial-piston type hydraulic machine according to claim 11,
wherein the cam surface (33) includes a high-pressure region (HA) including a section of the cam surface which faces the roller surface (27) in a period when a pressure in the working chamber (25) is relatively high, and a low-pressure (LA) region including a section of the cam surface (33) which faces the roller surface (27) in a period when the pressure in the working chamber (25) is relatively low, each of the periods being a part of a cycle in which the piston (24) reciprocates in the cylinder (22), and
wherein the surface roughness of the low-pressure region (LA) is larger than the surface roughness of the high-pressure region (HA).

13. A hydraulic transmission, comprising:

a rotation shaft (6);
a hydraulic pump (8) configured to be driven by rotation of the rotation shaft (6); and
a hydraulic motor (10) configured to be driven by pressurized oil produced by the hydraulic pump (8),
wherein at least one of the hydraulic pump (8) or the hydraulic motor (10) is the radial-piston type hydraulic machine (20) according to any one of claims 1 to 12.

14. A wind turbine power generating apparatus (1), comprising:

at least one blade (2);
a hub (3) to which the at least one blade (2) is attached;
a hydraulic pump (8) configured to be driven by rotation of the hub (3);
a hydraulic motor (10) configured to be driven by pressurized oil produced by the hydraulic pump (8); and
a generator (16) configured to be driven by the hydraulic motor,
wherein at least one of the hydraulic pump or the hydraulic motor is the radial-piston type hydraulic machine (20) according to any one of claims 1 to 12.

**Patentansprüche**

1.  Radialkolben-Hydraulikmaschine (20) umfassend:

mindestens einen Kolben (24), der entlang einer radialen Richtung der Hydraulikmaschine (20) angeordnet ist;
eine Rolle (26), die drehbar am Kolben (24) angeordnet ist, wobei die Rolle (26) eine Rollenoberfläche (27) aufweist; und
eine Nocke (32) mit einer Nockenoberfläche (33), die derart angeordnet ist, dass sie über einen Ölfilm aus Schmieröl der Rollenoberfläche (27) gegenüberliegt, wobei die Nocke (32) derart konfiguriert ist, dass sie drehbar ist,
**dadurch gekennzeichnet, dass** mindestens eine der Rollenoberfläche (27) oder der Nockenoberfläche (33) eine isotrope Oberflächenrauheit oder eine Oberflächenrauheit mit einer Anisotropie entlang einer Richtung einer Drehachse (0) der Nocke (32) aufweist, und dass die Geschwindigkeiten der Rollenoberfläche (27) und der Nockenoberfläche (33), die die Drehung der Rolle (26) und der Nocke (32) begleiten, derart eingestellt ist, dass ein Wert $\Lambda$ nicht kleiner als Null und nicht größer als 1,0 ist, wobei der Wert $\Lambda$ definiert ist durch die folgende Gleichung:

$$\Lambda = t / (Ra1^2 + Ra2^2)^{0,5},$$

wobei "t" die Dicke des Ölfilms ist, "Ra1" eine Oberflächenrauheit der Rollenoberfläche (27) ist, und "Ra2" eine Oberflächenrauheit der Nockenoberfläche (33) ist.

2.  Radialkolben-Hydraulikmaschine nach Anspruch 1, die derart konfiguriert ist, dass, wenn das Schmieröl bei einer Temperatur von 40 °C eine kinetische Viskosität von 35,0 bis 55,0 mm$^2$/s hat, der Ölfilm eine größere Dicke hat als diejenige in dem Fall, dass die eine der Rollenoberfläche (27) oder der Nockenoberfläche (33) eine Spiegelfläche ist.

3.  Radialkolben-Hydraulikmaschine nach Anspruch 1 oder 2, wobei die eine der Rollenoberfläche (27) oder der Nockenoberfläche (33) eine Polierrichtung entlang der Drehachse (O) aufweist, und die Oberflächenrauheit eine Anisotropie entlang der gleichen Richtung wie die Polierrichtung aufweist.

4.  Radialkolben-Hydraulikmaschine nach Anspruch 1 oder 2, wobei die eine der Rollenoberfläche (27) oder der Nockenoberfläche (33) eine isotrope Oberflächenrauheit aufweist, und die Oberflächenrauheit durch die Durchführung einer Strahlbehandlung mindestens an die eine der Rollenoberfläche (27) oder der Nockenoberfläche (33) gebildet wird.

5.  Radialkolben-Hydraulikmaschine nach einem der Ansprüche 1 bis 4,
wobei die Oberflächenrauheit Ra die eine der Rollenoberfläche (27) oder der Nockenoberfläche (33) nicht weniger als 0,1 und nicht mehr als 0,3 beträgt.

6.  Radialkolben-Hydraulikmaschine nach einem der Ansprüche 1 bis 5,
wobei mindestens eine der Rollenoberfläche (27) oder der Nockenoberfläche (33) durch eine Beschichtung gegeben ist, die ein Beschichtungsmaterial enthält, das eine höhere Härte aufweist als ein in der anderen der Walzenoberfläche (27) oder der Nockenoberfläche (33) enthaltener Werkstoff.

7.  Radialkolben-Hydraulikmaschine nach Anspruch 6, wobei die Rollenoberfläche (27) durch die Beschichtung gegeben ist, die das Beschichtungsmaterial enthält.

8.  Radialkolben-Hydraulikmaschine nach Anspruch 6 oder 7, wobei das Beschichtungsmaterial diamantähnlicher Kohlenstoff ist.

9.  Radialkolben-Hydraulikmaschine nach einem der Ansprüche 6 bis 8,
wobei die Rollenoberfläche (27) durch die Beschichtung gegeben ist, die den diamantähnlichen Kohlenstoff enthält, und die Nockenoberfläche (33) aus einem Wälzlagerstahl besteht.

10. Radialkolben-Hydraulikmaschine nach einem der Ansprüche 6 bis 9,
wobei es möglich ist, die Oberflächenrauheit der anderen Oberfläche der Rollenoberfläche (27) oder der Nockenoberfläche (33) durch den Betrieb der Hydraulikmaschine zu verringern.

**11.** Radialkolben-Hydraulikmaschine nach einem der Ansprüche 1 bis 10, die ferner einen Zylinder (22) zum wechselseitigen Führen des mindestens einen Kolbens (24) entlang der radialen Richtung umfasst, wobei der Kolben (24) eine Kolbenaufnahmefläche (243) umfasst, die die Rolle (26) aufnimmt, und einen Schmieröl-Versorgungskanal (245) umfasst, zum Zuführen von Arbeitsöl in eine Arbeitskammer (25), die von dem Kolben (24) und dem Zylinder (22) umgeben ist, als Schmieröl für die Kolbenaufnahmefläche (243).

**12.** Radialkolben-Hydraulikmaschine nach Anspruch 11, wobei die Nockenoberfläche (33) eine Hochdruckregion (HA) mit einem Abschnitt der Nockenoberfläche aufweist, die der Rollenoberfläche (27) in einem Zeitraum gegenüberliegt, wenn ein Druck in der Arbeitskammer (25) relativ hoch ist, und eine Niederdruckregion (LA) mit einem Abschnitt der Nockenoberfläche (33) aufweist, die der Rollenoberfläche (27) in einem Zeitraum gegenüberliegt, wenn der Druck in der Arbeitskammer (25) relativ niedrig ist, wobei jeder der Zeiträume ein Teil eines Zyklus ist, in dem sich der Kolben (24) in dem Zylinder (22) hin- und herbewegt, und wobei die Oberflächenrauheit der Niederdruckregion (LA) größer als die Oberflächenrauheit der Hochdruckregion (HA) ist.

**13.** Hydraulikgetriebe umfassend:

eine Drehwelle (6);
eine Hydraulikpumpe (8), die dafür konfiguriert ist, durch die Drehung der Drehwelle (6) angetrieben zu werden; und
einen Hydraulikmotor (10), der dafür konfiguriert ist, durch von der Hydraulikpumpe (8) erzeugtes Drucköl angetrieben zu werden,
wobei mindestens eine(n) der Hydraulikpumpe (8) oder des Hydraulikmotors (10) die Radialkolben-Hydraulikmaschine (20) nach einem der Ansprüche 1 bis 12 ist.

**14.** Vorrichtung (1) zur Erzeugung von Windenergie umfassend:

mindestens ein Blatt (2);
eine Nabe (3), an der das mindestens eine Blatt (2) angebracht ist;
eine Hydraulikpumpe (8), die dafür konfiguriert ist, durch die Drehung der Nabe (3) angetrieben zu werden;
einen Hydraulikmotor (10), der dafür konfiguriert ist, durch von der Hydraulikpumpe (8) erzeugtes Drucköl angetrieben zu werden; und
einen Generator (16), der dafür konfiguriert ist, durch den Hydraulikmotor angetrieben zu werden,
wobei mindestens eine(n) der Hydraulikpumpe oder des Hydraulikmotors die Radialkolben-Hydraulikmaschine (20) nach einem der Ansprüche 1 bis 12 ist.

**Revendications**

**1.** Machine hydraulique à pistons radiaux (20), comprenant :

au moins un piston (24) agencé le long d'une direction radiale de la machine hydraulique (20) ;
un rouleau (26) disposé en rotation sur le piston (24), le rouleau (26) ayant une surface de rouleau (27) ; et
une came (32) ayant une surface de came (33) qui est disposée de sorte à faire face à la surface de rouleau (27) à travers un film d'huile d'une huile lubrifiante, la came (32) étant configurée pour pouvoir tourner,
**caractérisée en ce qu'**au moins l'une parmi la surface de rouleau (27) ou la surface de came (33) a une rugosité de surface isotrope ou une rugosité de surface présentant une anisotropie le long d'une direction d'un axe de rotation (0) de la came (32), et **en ce que**
les vitesses de la surface de rouleau (27) et de la surface de came (33) accompagnant la rotation du rouleau (26) et de la came (32) sont réglées de sorte qu'une valeur Λ ne soit pas inférieure à zéro et ne soit pas supérieure à 1,0, la valeur Λ étant définie par l'équation suivante :

$$\Lambda = t / (Ra1^2 + Ra2^2)^{0,5},$$

où "t" représente une épaisseur du film d'huile, "Ra1" représente une rugosité de surface de la surface de rouleau (27), et "Ra2" représente une rugosité de surface de la surface de came (33).

**2.** Machine hydraulique à pistons radiaux selon la revendication 1, qui est configurée de sorte que, lorsque l'huile lubrifiante a une viscosité cinétique allant de 35,0 à 55,0 $mm^2$/s à une température de 40 °C, le film d'huile a une épaisseur plus importante que celle dans le cas où l'une parmi la surface de rouleau (27) ou la surface de came (33) est une surface en miroir.

**3.** Machine hydraulique à pistons radiaux selon la revendication 1 ou 2, dans laquelle l'une parmi la surface de rouleau (27) ou la surface de came (33) a une direction de polissage le long de l'axe de rotation (O), et la rugosité de surface présente une anisotropie le long de la même direction que la direction de polissage.

4. Machine hydraulique à pistons radiaux selon la revendication 1 ou 2, dans laquelle l'une parmi la surface de rouleau (27) ou la surface de came (33) a une rugosité de surface isotrope, et la rugosité de surface est formée en effectuant un traitement par soufflage au moins sur l'une parmi la surface de rouleau (27) ou la surface de came (33).

5. Machine hydraulique à pistons radiaux selon l'une quelconque des revendications 1 à 4, dans laquelle la rugosité de surface Ra de l'une parmi la surface de rouleau (27) ou la surface de came (33) n'est pas inférieure à 0,1 et n'est pas supérieure à 0,3.

6. Machine hydraulique à pistons radiaux selon l'une quelconque des revendications 1 à 5, dans laquelle au moins l'une parmi la surface de rouleau (27) ou la surface de came (33) est constituée par un revêtement qui contient un matériau de revêtement ayant une dureté supérieure à un matériau inclus dans l'autre parmi la surface de rouleau (27) ou la surface de came (33).

7. Machine hydraulique à pistons radiaux selon la revendication 6, dans laquelle la surface de rouleau (27) est constituée par le revêtement contenant le matériau de revêtement.

8. Machine hydraulique à pistons radiaux selon la revendication 6 ou 7, dans laquelle le matériau de revêtement est un carbone de type diamant.

9. Machine hydraulique à pistons radiaux selon l'une quelconque des revendications 6 à 8, dans laquelle la surface de rouleau (27) est constituée par le revêtement contenant le carbone de type diamant, et la surface de came (33) est constituée par un acier pour roulement.

10. Machine hydraulique à pistons radiaux selon l'une quelconque des revendications 6 à 9, dans laquelle il est possible de réduire la rugosité de surface de l'autre parmi la surface de rouleau (27) ou la surface de came (33) en actionnant la machine hydraulique.

11. Machine hydraulique à pistons radiaux selon l'une quelconque des revendications 1 à 10, comprenant en outre un cylindre (22) pour guider mutuellement le au moins un piston (24) le long de la direction radiale,

dans laquelle le piston (24) comporte une surface de réception de piston (243) qui reçoit le rouleau (26), et un canal d'alimentation en huile lubrifiante (245) pour fournir une huile de travail dans une chambre de travail (25) entourée par le piston (24) et le cylindre (22) comme l'huile lubrifiante à la surface de réception de piston (243).

12. Machine hydraulique à pistons radiaux selon la revendication 11, dans laquelle la surface de came (33) comporte une région de haute pression (HA) comportant une section de la surface de came qui fait face à la surface de rouleau (27) pendant une période où une pression dans la chambre de travail (25) est relativement élevée, et une région de basse pression (LA) comportant une section de la surface de came (33) qui fait face à la surface de rouleau (27) dans une période où la pression dans chambre de travail (25) est relativement basse, chacune des périodes faisant partie d'un cycle où le piston (24) effectue un mouvement de va-et-vient dans le cylindre (22), et dans laquelle la rugosité de surface de la région de basse pression (LA) est supérieure à la rugosité de surface de la région de haute pression (HA).

13. Transmission hydraulique, comprenant :

un arbre de rotation (6) ;
une pompe hydraulique (8) configurée pour être entraînée par la rotation de l'arbre de rotation (6) ; et
un moteur hydraulique (10) configuré pour être entraîné par une huile sous pression produite par la pompe hydraulique (8), dans laquelle au moins l'un(e) parmi la pompe hydraulique (8) ou le moteur hydraulique (10) est la machine hydraulique à pistons radiaux (20) selon l'une quelconque des revendications 1 à 12.

14. Appareil générateur d'énergie éolienne (1), comprenant :

au moins une pale (2) ;
un moyeu (3) sur lequel la au moins une pale (2) est fixée ;
une pompe hydraulique (8) configurée pour être entraînée par la rotation du moyeu (3) ;
un moteur hydraulique (10) configuré pour être entraîné par une huile sous pression produite par la pompe hydraulique (8) ; et
un générateur (16) configuré pour être entraîné par le moteur hydraulique, dans laquelle au moins l'un parmi la pompe hydraulique ou le moteur hydraulique est la machine hydraulique à pistons radiaux (20) selon l'une quelconque des revendications 1 à 12.

# FIG. 1

# FIG. 2

21S

24 22

20

21

26

30

32

Cam rotational direction

O

EP 3 006 733 B1

FIG. 3

Rotational direction of rotational axis O

(Cam rotational direction)

# FIG. 4

24

A

33

32

26

27

Polishing direction

Cam rotational direction

Axial direction of rotational axis O

EP 3 006 733 B1

## FIG. 5A

Cam rotational direction →

100

## FIG. 5B

Cam rotational direction →

100

## FIG. 5C

Cam rotational direction →

100

# FIG. 6

# FIG. 7

# FIG. 8A

# FIG. 8B

# FIG. 9

**EP 3 006 733 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2484890 A
- GB 2482879 A
- US 6237441 B1
- JP H0798052 A